# FASCICULE DE BREVET EUROPEEN

(11) **EP 4 116 154 B1**
(45) Date de publication et mention de la délivrance du brevet: **11.12.2024**
(21) Numéro de dépôt: 22182430.3
(22) Date de dépôt: 30.06.2022
(51) Int. Cl.: B60R 21/207, B60R 21/231, B60R 21/18

(54) **DISPOSITIF DE SECURITE COMPRENANT AU MOINS UN AIRBAG LATERAL**
SICHERHEITSVORRICHTUNG, DIE MINDESTENS EINEN SEITLICHEN AIRBAG UMFASST
SAFETY DEVICE COMPRISING AT LEAST ONE LATERAL AIRBAG

(30) Priorité: 09.07.2021 FR 2107472
(43) Date de publication de la demande: 11.01.2023
(73) Titulaire: Renault s.a.s, 92100 Boulogne Billancourt (FR)
(72) Inventeur: RUFFET, Renaud, 78280 GUYANCOURT (FR)

(56) Documents cités:
- FR-A1- 2 951 678
- US-A- 5 575 497

## Description

### DOMAINE TECHNIQUE DE L'INVENTION

La présente invention concerne de manière générale la sécurité des passagers de véhicules, et notamment des passagers d'automobiles (voitures, camions, camionnettes... ).

Elle concerne plus particulièrement un dispositif de retenue d'un occupant d'un siège de véhicule, comprenant un coussin gonflable de sécurité (plus connu sous la dénomination anglaise « d'airbag ») qui est adapté à être logé dans le siège et qui, lorsqu'il se gonfle, est adapté à se déployer sur un côté de l'occupant, ce coussin gonflable de sécurité délimitant deux chambres distinctes adaptées à communiquer l'une avec l'autre.

Elle concerne également un siège équipé d'un tel dispositif de retenue.

### ETAT DE LA TECHNIQUE

La législation impose de disposer des airbags dans l'habitacle d'un véhicule automobile de façon à réduire les dommages occasionnés aux passagers de ce véhicule en cas d'accident.

On connaît par exemple du document US8469395 un siège équipé, dans l'un des deux flancs de son dossier, d'un coussin gonflable de sécurité en deux parties.

Ces deux parties sont prévues pour se gonfler en cas de choc latéral de telle sorte qu'elles se déploient respectivement sur le côté du tronc de l'occupant du siège et sur le côté de sa tête.

Un canal de communication est prévu entre ces deux parties pour permettre à une cartouche génératrice de gaz de simultanément gonfler les deux parties de l'airbag. US5575497A, l'état de la technique le plus proche à l'objet de la revendication 1, divulgue un dispositif de retenue d'un occupant d'un siège de véhicule, comprenant au moins un coussin gonflable de sécurité qui est adapté à être logé dans le siège et qui, lorsqu'il se gonfle, est adapté à se déployer sur un côté de l'occupant, ce coussin gonflable de sécurité délimitant deux chambres distinctes adaptées à communiquer l'une avec l'autre, dont il est prévu une membrane qui isole les deux chambres et qui est adaptée à céder lorsque la différence de pression entre les deux chambres dépasse un seuil.

L'inconvénient d'un tel coussin gonflable de sécurité est que sa forme ne permet pas d'assurer un niveau de sécurité aussi élevé que souhaité, sauf à prévoir que ses deux parties présentent des volumes très importants. Cependant, un tel volume n'est pas envisageable lorsqu'on utilise une seule cartouche de gaz pour gonfler les deux parties de l'airbag, puisque cela nécessiterait un temps de gonflage trop élevé.

### PRESENTATION DE L'INVENTION

Afin de remédier aux inconvénients précités de l'état de la technique, la présente invention propose un airbag dont la forme assure un bon niveau de protection à l'occupant, et dont la structure permet sa mise en place rapide, dans la position souhaitée, à l'aide de préférentiellement une seule cartouche génératrice de gaz.

Plus particulièrement, on propose selon l'invention un dispositif de retenue tel que défini dans l'introduction, dans lequel le coussin gonflable de sécurité est conformé pour, lorsqu'il se gonfle, passer sous une aisselle de l'occupant et remonter sur le côté de la tête de l'occupant, et dans lequel il est prévu une membrane qui isole les deux chambres du coussin et qui est adaptée à céder lorsque la différence de pression entre les deux chambres dépasse un seuil.

Ainsi, grâce à sa forme, le coussin gonflable de sécurité passe sur le côté du tronc de l'occupant du siège et remonte vers sa tête, ce qui assure une bonne protection à l'occupant en cas de choc latéral. Du fait de sa forme particulière en « boudin courbé », il est nécessaire que le coussin se mette correctement en place dans le véhicule.

S'il était dépourvu de membrane, cette mise en place ne serait pas toujours réussie. Grâce à la membrane, la première chambre du coussin gonflable de sécurité peut se gonfler entièrement avant que la seconde chambre ne se gonfle, ce qui assure un bon positionnement de la première chambre et, partant, de la seconde chambre.

En d'autres termes, le gonflage non pas simultané mais successif des deux chambres permet d'assurer le bon positionnement du coussin gonflable de sécurité lors de son déploiement.

D'autres caractéristiques avantageuses et non limitatives du dispositif de retenue conforme à l'invention, prises individuellement ou selon toutes les combinaisons techniquement possibles, sont les suivantes :
- la membrane isole complètement les deux chambres ;
- la première chambre forme une boucle ;
- la seconde chambre s'étend sensiblement selon un diamètre de ladite boucle ;
- la membrane est réalisée dans un matériau distinct de celui du reste du coussin gonflable de sécurité, qui est adapté à se déchirer lorsque la différence de pression entre les deux chambres dépasse ledit seuil ;
- la membrane est réalisée dans un matériau identique à celui du reste du coussin gonflable de sécurité ;
- la membrane est fixée au reste du coussin gonflable de sécurité par des moyens de fixation adaptés à céder lorsque la différence de pression entre les deux chambres dépasse ledit seuil ;
- les moyens de fixation comportent une couture adaptée à céder lorsque la différence de pression entre les deux chambres dépasse ledit seuil ;
- les moyens de fixation comportent une colle adaptée à céder lorsque la différence de pression entre les deux chambres dépasse ledit seuil ;
- il est prévu un autre coussin gonflable de sécurité adapté à se déployer sur l'autre côté de l'occupant, les deux coussins gonflables de sécurité étant sensiblement symétriques l'un de l'autre.

L'invention porte aussi sur un siège pour véhicule, comportant une assise et un dossier qui comporte un dispositif de retenue tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique de côté d'un véhicule automobile, sur laquelle apparait un siège, un occupant de ce siège et un dispositif de sécurité conforme à l'invention ;
[Fig. 2] est une vue schématique de face du siège, de l'occupant et du dispositif de sécurité de la figure 1 ;
[Fig. 3] est une vue schématique de côté du dispositif de sécurité de la figure 1.

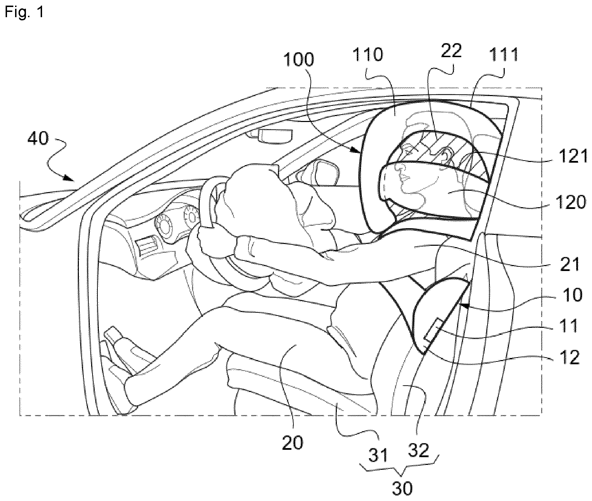

Sur la figure 1, on a représenté un siège 30 occupé par une personne.

Ce siège 30 est ici installé dans l'habitacle d'une voiture. En variante, il pourrait être installé dans l'habitacle de tout autre type de véhicule (camion, wagon...).

Il s'agit ici du siège 30 du conducteur 20 de ce véhicule 40. Bien entendu, il pourrait en variante s'agir d'un autre des sièges du véhicule.

Ce siège comporte classiquement une assise 31 et un dossier 32 équipé d'un appui-tête. Le dossier 32 présente une partie centrale d'appui pour le dos du conducteur 20, et deux flancs situés de part et d'autre de cette partie centrale, venant se placer de chaque côté du tronc du conducteur lorsque ce dernier est assis en position centrée sur le siège 30.

Le siège 30 est ici équipé d'un dispositif de retenue 10 du conducteur 20 en cas de choc latéral, c'est-à-dire d'un dispositif permettant de retenir le conducteur et d'amortir le choc ressenti lorsque la voiture percute par le côté un obstacle ou lorsqu'elle est elle-même percutée par le côté (gauche ou droit).

Dans la suite de la description, les termes « inférieur » (ou « bas ») et « supérieur » (ou « haut »), « avant », « arrière », « droit » et gauche » seront utilisés par rapport au siège 30 du véhicule automobile 40, le côté inférieur d'un élément désignant par exemple la partie de cet élément qui est tournée du côté du plancher du véhicule.

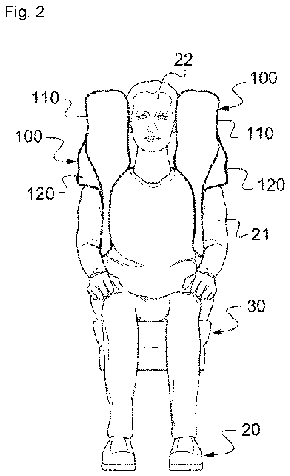

Comme le montre la figure 2, le dispositif de retenue 10 comporte deux coussins gonflables de sécurité, ci-après plus simplement appelés coussins 100.

Ces deux coussins 100 sont situés de part et d'autre du conducteur 20. Ces deux coussin 100 étant similaires (plus précisément symétriques l'un de l'autre par rapport au plan médian du siège), un seul d'entre eux sera décrit dans la suite de cet exposé (à savoir le coussin gauche).

Comme le montre la figure 1, ce coussin 100 est équipé d'une unique cartouche génératrice de gaz 11 permettant de le gonfler en cas d'accident.

Il est entièrement logé dans le siège 30 tant qu'aucun choc n'a été ressenti et que la cartouche génératrice de gaz 11 n'a pas été déclenchée. Dans cette position, le coussin 100 est plus précisément logé dans une poche 12 située dans l'un des flancs du dossier 32, en étant replié dans celle-ci.

Dans la suite de la description, ce coussin 100 sera décrit à l'état gonflé et déployé. Il est d'ailleurs représenté sur les différentes figures dans cet état.

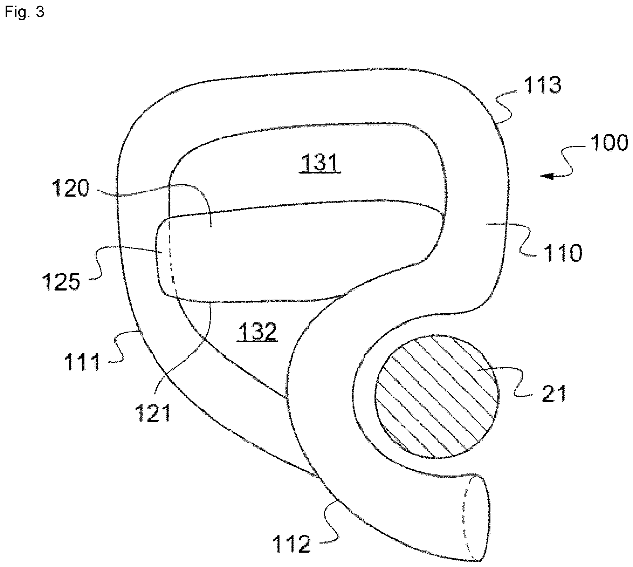

Comme le montrent bien les figures 1 et 3, le coussin 100, qui est déployé sur le côté gauche du conducteur 20, délimite deux chambres 110, 120.

Chacune de ces deux chambres 110, 120 est délimitée par une enveloppe 111, 121 en tissu, qui est distincte de celle de l'autre chambre.

La première enveloppe 111, qui délimite la première de ces chambres 110, forme ici un boudin courbe tandis que la seconde enveloppe 121, qui délimite la seconde chambre 120, forme un boudin droit.

La première enveloppe 111 s'étend ici à partir du flanc gauche du dossier 32. Elle présente donc une extrémité rattachée à ce flanc, au niveau de laquelle se situe une ouverture au travers de laquelle le gaz issu de la cartouche est soufflé.

Cette première enveloppe présente, du côté de cette extrémité, une première partie en forme de S inversé, qui se prolonge sur une deuxième partie afin de former une boucle 113. La première enveloppe 111 forme donc une demi-boucle 112 (correspondant à la partie inférieure de ce S) qui lui permet de passer sous l'aisselle du bras 21, depuis le flanc gauche du dossier, et de remonter au-dessus de l'épaule du conducteur 20.

Cette demi-boucle 112 se prolonge ensuite vers le haut et est recourbée vers l'avant de façon à former la boucle 113.

Cette boucle 113 est complète (c'est-à-dire « fermée) puisque la seconde extrémité de la première enveloppe 111 s'appuie contre la demi-boucle 112.

La première enveloppe 111 s'étend donc globalement selon un plan parallèle au plan médian du siège 30, sur le côté du conducteur 20. Sa boucle 113 se place notamment sur le côté de la tête 22 du conducteur 20. La partie haute de cette boucle s'étend à la hauteur du haut de la tête du conducteur.

On notera, en référence à la figure 2, que la première enveloppe 111 présente une largeur bien inférieure au niveau de la demi-boucle 112 qu'au niveau de la boucle 113, de façon à ne pas forcer le conducteur à écarter les bras.

Comme le montre la figure 3, la seconde enveloppe 121, qui délimite la seconde chambre 120, s'étend globalement selon un diamètre de la boucle 113, à la hauteur du cou du conducteur. Elle présente une largeur maximum supérieure à la largeur maximum de la première enveloppe 111 (voir figure 2).

Elle s'étend ici sensiblement horizontalement. Elle permet, dans l'éventualité où le véhicule serait percuté par le côté, de retenir le cou du conducteur 20 dont la tête est retenue par la première enveloppe 111.

Cette seconde enveloppe 121 se rattache uniquement par son extrémité avant à la première enveloppe 111. Son autre extrémité est libre et elle vient s'appuyer contre la première enveloppe 111.

Les deux chambres 110, 120 sont bien distinctes mais adaptées à communiquer l'une avec l'autre.

Pour cela, la seconde enveloppe 121 est ouverture du côté de son extrémité avant et elle est cousue sur le bord d'une ouverture prévue dans la première enveloppe 111.

Dans le cadre de l'invention, il est prévu une membrane 125 pour isoler les deux chambres 110, 120, qui est adaptée à céder lorsque la différence de pression entre les deux chambres 110, 120 dépasse un seuil. L'idée est que cette membrane 125 permette à la première chambre 110 de se gonfler entièrement et de se positionner correctement dans l'habitacle du véhicule avant que la seconde chambre 120 ne se gonfle.

On notera que le seuil de pression au-delà duquel la membrane 125 cédera pour permettre à la seconde chambre 120 de se gonfler sera de préférence au moins deux fois inférieur à la pression nécessaire pour faire céder les enveloppes 111, 121 en tissu. Il sera même plus préférentiellement encore inférieur à la pression maximum qui sera atteinte dans les deux chambres 110, 120 lorsque l'ensemble de la cartouche émettrice de gaz 11 aura été consommée.

De manière préférentielle, cette membrane 125 isole complètement les deux chambres 110, 120, si bien que seule la première chambre 110 se gonfle tant que la membrane 125 n'a pas cédée sous la pression.

En variante, on pourrait prévoir que la membrane 125 n'isole que globalement les deux chambres, en tolérant des fuites entre les deux chambres représentant au maximum 5 à 15% du volume d'air.

Quoi qu'il en soit, la membrane 125 permet à la première chambre 110 de se gonfler entièrement pour prendre sa position déployée dans le véhicule avant que la seconde chambre 120 ne commence à se déployer.

On peut envisager plusieurs modes de réalisation de la membrane 125, et notamment les trois suivants.

Dans un premier mode de réalisation, la membrane 125 est réalisée dans un matériau qui est différent de celui employé pour réaliser les enveloppes 111, 121 et qui est adapté à se déchirer lorsque la différence de pression entre les deux chambres 110, 120 dépasse le seuil prévu.

La membrane peut alors être collée ou, préférentiellement, cousue sur les enveloppes, ou encore être fixée à celles-ci de diverses autres manières.

A titre d'exemple, la membrane 125 peut être réalisée en caoutchouc.

Dans un autre exemple, elle peut être réalisée dans un tissu dont le fil et le tissage présentent une résistance à la rupture connue et au moins deux fois plus faible que celle du tissu employé pour réaliser les enveloppes 111, 121.

Dans un second mode de réalisation, la membrane 125 est réalisée dans un matériau identique à celui des enveloppes 111, 121. Dans ce mode de réalisation, la membrane 125 est alors fixée aux enveloppes 111, 121 par des moyens de fixation adaptés à céder lorsque la différence de pression entre les deux chambres 110, 120 dépasse le seuil prévu.

A titre s'exemple, la membrane 125 peut être cousue sur l'une ou l'autre des enveloppes à l'aide d'un fil ayant une résistance à la rupture connue, laquelle résistance est au moins deux fois inférieure à la résistance du fil employé pour coudre les deux enveloppes 111, 121 l'une sur l'autre.

En variante, la membrane 125 peut être collée sur l'une ou l'autre des enveloppes à l'aide d'une colle ayant une résistance à la rupture connue.

Dans un troisième mode de réalisation, la membrane 125 est réalisée dans un matériau distinct de celui des enveloppes 111, 121, qui est adapté à se déchirer lorsque la différence de pression entre les deux chambres 110, 120 dépasse le seuil prévu, et la membrane 125 est fixée aux enveloppes 111, 121 par des moyens de fixation adaptés à céder lorsque la différence de pression entre les deux chambres 110, 120 dépasse ce seuil.

Ce troisième mode de réalisation offre une redondance qui assure la rupture de la membrane lorsque la première chambre est entièrement gonflée et déployée dans la position adéquate.

Comme le montre bien la figure 3, l'espace délimité intérieurement par la boucle 113 formée par la première enveloppe 111 est préférentiellement entièrement fermé, d'une part par la seconde enveloppe 121, et d'autre part par deux voiles 131, 132 qui s'étendent de part et d'autre de la seconde enveloppe 121. Ces deux voiles permettent d'assurer au coussin 100 de prendre la forme souhaitée lorsqu'il est gonflé.

Les deux voiles 131, 132 peuvent être formés chacun d'une simple feuille de tissu ou de bandes séparées les unes des autres. Ils peuvent être cousus sur les bords des enveloppes. Ils se distinguent de ces enveloppes en ce sens qu'ils ne sont pas gonflables. Ici, ils sont formés d'une simple épaisseur de tissu. Sur la figure 1, les voiles ont été hachurés pour les distinguer des deux enveloppes et pour laisser apparaître en transparence la tête du conducteur.

On notera que dans tous les modes de réalisation, le coussin 100 sera dépourvu de sangle permettant de le retenir par rapport au siège afin de lui assurer un déploiement dans la position souhaitée. Seule l'une des extrémités de la première enveloppe 111 se rattache en effet au siège.

La présente invention n'est nullement limitée au mode de réalisation décrit et représenté, mais l'homme du métier saura y apporter toute variante conforme à l'invention.

A titre d'exemple, le siège pourrait n'être équipé que d'un seul coussin du type de ceux représentés sur la figure 2, auquel cas ce coussin sera préférentiellement placé entre le conducteur et sa portière.

## Revendications

1. Dispositif de retenue (10) d'un occupant (20) d'un siège (30) de véhicule (40), comprenant au moins un coussin gonflable de sécurité (100) qui est adapté à être logé dans le siège (30) et qui, lorsqu'il se gonfle, est adapté à se déployer sur un côté de l'occupant (20), ce coussin gonflable de sécurité (100) délimitant deux chambres (110, 120) distinctes adaptées à communiquer l'une avec l'autre,
**caractérisé en ce que** le coussin gonflable de sécurité (100) est conformé pour, lorsqu'il se gonfle, passer sous une aisselle de l'occupant (20) et remonter sur le côté de la tête (22) de l'occupant (20), et
**en ce qu'**il est prévu une membrane (125) qui isole les deux chambres (110, 120) et qui est adaptée à céder lorsque la différence de pression entre les deux chambres (110, 120) dépasse un seuil.

2. Dispositif de retenue (10) selon la revendication précédente, dans lequel la membrane (125) isole complètement les deux chambres (110, 120).

3. Dispositif de retenue (10) selon l'une des revendications 1 et 2, dans lequel la première chambre (110) forme une boucle.

4. Dispositif de retenue (10) selon la revendication 3, dans lequel la seconde chambre (120) s'étend sensiblement selon un diamètre de ladite boucle.

5. Dispositif de retenue (10) selon l'une des revendications 1 à 4, dans lequel la membrane (125) est réalisée dans un matériau distinct de celui du reste du coussin gonflable de sécurité (100), qui est adapté à se déchirer lorsque la différence de pression entre les deux chambres (110, 120) dépasse ledit seuil.

6. Dispositif de retenue (10) selon l'une des revendications 1 à 4, dans lequel la membrane (125) est réalisée dans un matériau identique à celui du reste du coussin gonflable de sécurité (100), et dans lequel la membrane (125) est fixée au reste du coussin gonflable de sécurité (100) par des moyens de fixation adaptés à céder lorsque la différence de pression entre les deux chambres (110, 120) dépasse ledit seuil.

7. Dispositif de retenue (10) selon la revendication 6, dans lequel les moyens de fixation comportent une couture adaptée à céder lorsque la différence de pression entre les deux chambres (110, 120) dépasse ledit seuil.

8. Dispositif de retenue (10) selon la revendication 6, dans lequel les moyens de fixation comportent une colle adaptée à céder lorsque la différence de pression entre les deux chambres (110, 120) dépasse ledit seuil.

9. Dispositif de retenue (10) selon l'une des revendications 1 à 8, dans lequel il est prévu un autre coussin gonflable de sécurité (100) adapté à se déployer sur l'autre côté de l'occupant (20), les deux coussins gonflables de sécurité (100) étant sensiblement symétriques l'un de l'autre.

10. Siège (30) pour véhicule, comportant une assise (31) et un dossier (32), **caractérisé en ce que** le dossier (32) comporte un dispositif de retenue (10) conforme à l'une des revendications 1 à 9.

## Patentansprüche

1. Rückhaltevorrichtung (10) zum Zurückhalten eines Insassen (20) eines Sitzes (30) eines Fahrzeugs (40), umfassend mindestens ein aufblasbares Sicherheitskissen (100), das geeignet ist, in dem Sitz (30) aufgenommen zu werden, und das, wenn es sich aufbläst, geeignet ist, sich auf einer Seite des Insassen (20) zu entfalten, wobei dieses aufblasbare Sicherheitskissen (100) zwei verschiedene Kammern (110, 120) begrenzt, die geeignet sind, miteinander in Verbindung zu stehen,
**dadurch gekennzeichnet, dass** das aufblasbare Sicherheitskissen (100) dazu ausgebildet ist, wenn es sich aufbläst, unter einer Achselhöhle des Insassen (20) zu verlaufen und auf der Seite des Kopfes (22) des Insassen (20) wieder aufzusteigen, und
dadurch, dass eine Membran (125) vorgesehen ist, die die beiden Kammern (110, 120) trennt und die geeignet ist nachzugeben, wenn die Druckdifferenz zwischen den beiden Kammern (110, 120) einen Schwellenwert überschreitet.

2. Rückhaltevorrichtung (10) nach dem vorhergehenden Anspruch, wobei die Membran (125) die beiden Kammern (110, 120) vollständig trennt.

3. Rückhaltevorrichtung (10) nach einem der Ansprüche 1 und 2, wobei die erste Kammer (110) eine Schlaufe bildet.

4. Rückhaltevorrichtung (10) nach Anspruch 3, wobei sich die zweite Kammer (120) im Wesentlichen entlang eines Durchmessers der Schlaufe erstreckt.

5. Rückhaltevorrichtung (10) nach einem der Ansprüche 1 bis 4, wobei die Membran (125) aus einem Material ausgeführt ist, das verschieden von dem des Rests des aufblasbaren Sicherheitskissens (100) ist und das geeignet ist zu reißen, wenn die Druckdifferenz zwischen den beiden Kammern (110, 120) den Schwellenwert überschreitet.

6. Rückhaltevorrichtung (10) nach einem der Ansprüche 1 bis 4, wobei die Membran (125) aus einem Material ausgeführt ist, das identisch mit dem des Rests des aufblasbaren Sicherheitskissens (100) ist, und wobei die Membran (125) an dem Rest des aufblasbaren Sicherheitskissens (100) mit Befestigungsmitteln befestigt ist, die geeignet sind nachzugeben, wenn die Druckdifferenz zwischen den beiden Kammern (110, 120) den Schwellenwert überschreitet.

7. Rückhaltevorrichtung (10) nach Anspruch 6, wobei die Befestigungsmittel eine Naht umfassen, die geeignet ist nachzugeben, wenn die Druckdifferenz zwischen den beiden Kammern (110, 120) den Schwellenwert überschreitet.

8. Rückhaltevorrichtung (10) nach Anspruch 6, wobei die Befestigungsmittel einen Klebstoff umfassen, der geeignet ist nachzugeben, wenn die Druckdifferenz zwischen den beiden Kammern (110, 120) den Schwellenwert überschreitet.

9. Rückhaltevorrichtung (10) nach einem der Ansprüche 1 bis 8, wobei ein weiteres aufblasbares Sicherheitskissen (100) vorgesehen ist, das geeignet ist, sich auf der anderen Seite des Insassen (20) zu entfalten, wobei die beiden aufblasbaren Sicherheitskissen (100) im Wesentlichen symmetrisch zueinander sind.

10. Sitz (30) für ein Fahrzeug, umfassend eine Sitzfläche (31) und eine Rückenlehne (32), **dadurch gekennzeichnet, dass** die Rückenlehne (32) eine Rückhaltevorrichtung (10) nach einem der Ansprüche 1 bis 9 umfasst.

## Claims

1. Device (10) for restraining an occupant (20) of a seat (30) of a vehicle (40), comprising at least one airbag (100) that is designed to be housed in the seat (30) and that, when it inflates, is designed to deploy on one side of the occupant (20), this airbag (100) delimiting two distinct chambers (110, 120) that are designed to communicate with one another,
**characterized in that** the airbag (100) is shaped so as to, when it inflates, pass beneath an armpit of the occupant (20) and rise up on the side of the head (22) of the occupant (20), and
**in that** a membrane (125) is provided that isolates the two chambers (110, 120) and that is designed to yield when the pressure difference between the two chambers (110, 120) exceeds a threshold.

2. Restraining device (10) according to the preceding claim, wherein the membrane (125) completely isolates the two chambers (110, 120).

3. Restraining device (10) according to either of Claims 1 and 2, wherein the first chamber (110) forms a loop.

4. Restraining device (10) according to Claim 3, wherein the second chamber (120) extends substantially along a diameter of said loop.

5. Restraining device (10) according to one of Claims 1 to 4, wherein the membrane (125) is made of a material distinct from that of the rest of the airbag (100), which is designed to tear when the pressure difference between the two chambers (110, 120) exceeds said threshold.

6. Restraining device (10) according to one of Claims 1 to 4, wherein the membrane (125) is made of a material identical to that of the rest of the airbag (100), and wherein the membrane (125) is fastened to the rest of the airbag (100) by fastening means that are designed to yield when the pressure difference between the two chambers (110, 120) exceeds said threshold.

7. Restraining device (10) according to Claim 6, wherein the fastening means have a seam that is designed to yield when the pressure difference between the two chambers (110, 120) exceeds said threshold.

8. Restraining device (10) according to Claim 6, wherein the fastening means have an adhesive that is designed to yield when the pressure difference between the two chambers (110, 120) exceeds said threshold.

9. Restraining device (10) according to one of Claims 1 to 8, wherein another airbag (100) is provided that is designed to deploy on the other side of the occupant (20), the two airbags (100) being substantially symmetrical to one another.

10. Seat (30) for a vehicle, having a seat pan (31) and a backrest (32), **characterized in that** the backrest (32) has a restraining device (10) in accordance with one of Claims 1 to 9.
